# EUROPEAN PATENT APPLICATION

(11) **EP 2 036 810 A2**
(43) Date of publication of application: **18.03.2009**
(21) Application number: 08156063.3
(22) Date of filing: 13.05.2008
(51) Int. Cl.: B62K 21/02, B62H 5/14

(54) **Wheel fork for a bicycle, and bicycle frame as well as bicycle provided with such a wheel fork**

(30) Priority: 11.05.2007 NL 1033833
(71) Applicant: Batavus B.V., 8444 AR Heerenveen (NL)
(72) Inventor: van der Woning, Mark Ronald, 8441 GE Heerenveen (NL)
(74) Representative: Hatzmann, Martin

(57) **Abstract**

A wheel fork (1) for a bicycle comprises two legs (4A, 4B) located in a wheel fork plane of the wheel fork, and a receiving provision for receiving a ring lock (2) for the bicycle. The receiving provision comprises a receiving cavity (7A, 7B) formed in at least one of the two legs. The receiving cavity lies between two parts (5A, 5B, 6A, 6B) of the at least one leg, located opposite each other viewed in transverse direction to the wheel fork plane. At least one of the two legs comprises an insertion/take out opening (8A, 8B) for inserting the ring lock into the receiving provision or taking the ring lock out of the receiving provision via the insertion/take out opening, parallel to the wheel fork plane in a transverse direction (A, B) to at least one of the two legs.

## Description

The invention relates to a wheel fork for a bicycle. The invention also relates to a bicycle frame provided with such a wheel fork, and to a bicycle provided with such a wheel fork.

From practice, a bicycle is known with which, on the wheel fork of the bicycle, a ring lock is attached. By means of the ring lock, the bicycle can be protected against theft through introduction of the annular segmented bolt of the ring lock between the spokes of a wheel, and locking the bolt in this condition. As a result, the wheel is blocked.

A drawback of the known assembly is that in the locked condition, the ring lock is relatively easy to sabotage. The fact is that by detaching or vandalizing the attachment of the ring lock to the wheel fork and/or by prizing between ring lock and wheel fork, the ring lock can be twisted such that the bolt comes to lie to the side of the bicycle. In this position, the bolt is well accessible to a cutting or grinding instrument. Thus, the bicycle can be stripped of its ring lock without (appreciably) damaging the bicycle.

From NL8902172, a ring lock is known that meets the above-mentioned drawback in that the ring lock is largely integrated in the rear fork of a bicycle. The bolt of the ring lock known from NL8902172 is received in two outer housing parts, each U-shaped in cross-section, facing each other by their open sides. Each of the two housing parts also forms a leg of the rear fork. As a result, the ring lock cannot be twisted and the bolt of the lock cannot be reached with a grinder from the side of the bicycle. When the lock has been prized open, it should be replaced with a new unit of lock and rear fork or with an alternative, conventional rear fork with a lock, which is time consuming and relatively expensive. This will deter a bicycle thief from sabotaging the lock.

However, a drawback of this known ring lock integrated in the rear fork is that also, repairing or replacing the ring lock is time consuming and relatively expensive. For disassembling the lock, the rear wheel, mudguard, luggage carrier and rear fork need to be disassembled. Most often, the unit of lock and rear fork is to be replaced in its entirety.

It is an object of the invention to provide a solution according to which sabotaging a ring lock is not easy, while the ring lock can be easily repaired and replaced.

To this end, according to the invention, a wheel fork according to claim 1 is provided, i.e., a wheel fork for a bicycle, comprising two legs located in a wheel fork plane of the wheel fork, and a receiving provision for receiving a ring lock for the bicycle, which receiving provision comprises a receiving cavity which is formed in at least one of the two legs, which receiving cavity lies, viewed in transverse direction to the wheel fork plane, between two opposite parts of the at least one leg, wherein at least one of the two legs comprises an insertion/take out opening for inserting into or taking the ring lock out of the receiving provision via the insertion/take out opening, parallel to the wheel fork plane in a transverse direction to at least one of the two legs.

When, in operative condition, the ring lock is received in the receiving provision of the wheel fork, the parts of the ring lock present in the receiving cavity are confined between the opposite parts of the at least one leg. As a result, prizing between ring lock and wheel fork and twisting the ring lock such that the bolt of the ring lock comes to lie to the side of the bicycle is made more difficult. If a malicious individual should nevertheless succeed in twisting the ring lock, grinding the bolt in two is complicated by one or both legs of the wheel fork being in the way.

For the purpose of repair or replacement of the ring lock, the ring lock can simply be disassembled from the wheel fork by removing the ring lock from the receiving provision via the inserting/take out opening, parallel to the wheel fork plane in a transverse direction to at least one of the two legs. Here, it can be necessary to first eliminate optional blockings which complicate taking the ring lock out in a take out direction. Elimination of such blockings can be carried out more easily by a repair man in, for instance, a workshop than by a bicycle thief in the street. Some blockings can simply be eliminated by having the key associated with the ring lock at hand. Remounting the repaired ring lock or a replacement ring lock is simple too. The ring lock can be reintroduced into the receiving provision via the insertion/take out opening, parallel to the wheel fork plane in a transverse direction to at least one of the two legs. Hence, the ring lock is easy to repair and replace.

Also, according to the invention, a bicycle frame according to claim 8 is provided, and a bicycle according to claim 9.

Specific embodiments of the invention are laid down in the dependent claims.

In the following, the invention is further elucidated with reference to the schematic Figures in the appended drawing.

Fig. 1 shows, in perspective view, an example of an embodiment of a wheel fork according to the invention.

Fig. 2 shows, in perspective view, the example of Fig. 1 again and now together with a ring lock and further parts of the wheel fork in a taken apart condition.

Fig. 3 shows the example of Fig. 2 again but now in assembled condition and in front view to the wheel fork plane of the wheel fork.

The Figures show an assembly of a wheel fork 1 and a ring lock 2 for a bicycle. The ring lock 2 shown is of a conventional type. Accordingly, the ring lock has a substantially flat annular shape, while the annular shape is closed when an annular segmental bolt 3 of the ring lock in the closed condition.

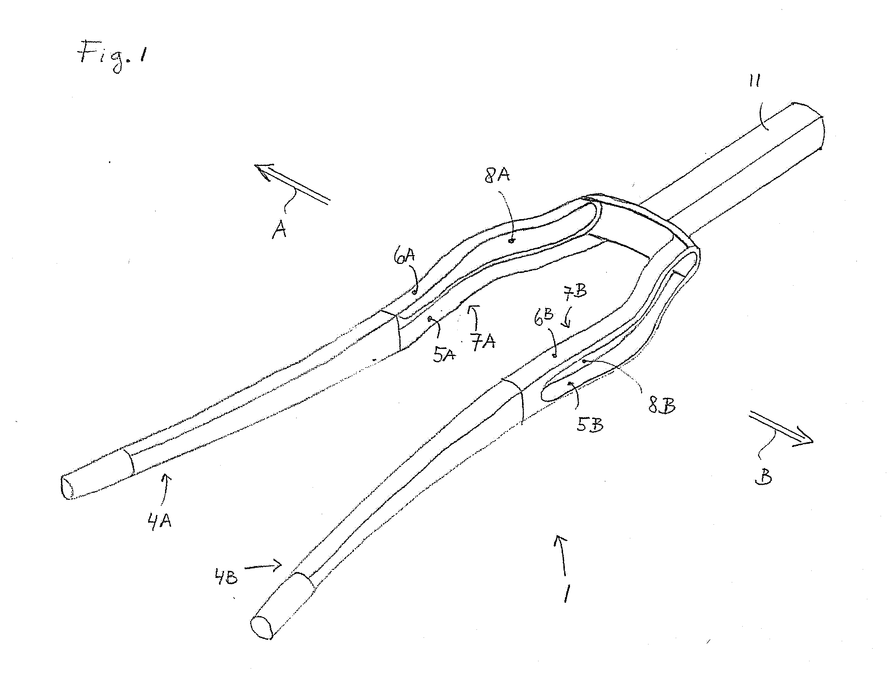

The wheel fork 1 can be a rear fork, but also a front fork. The wheel fork comprises two legs 4A and 4B, located in a wheel fork plane of the wheel fork. In the example shown, the wheel fork plane is a substantially straight plane and, as can be seen at the top of Fig. 1, the two legs 4A and 4B are each connected, via a connecting element 10 of the wheel fork, to a tube element 11. However, it is noted that the invention is not limited to a wheel fork with such a wheel fork plane and such a connection of the legs. Apart from the area intended for receiving the substantially flat ring lock 2, the wheel fork plane can for instance also have a partly curved configuration, for instance a curved configuration in side view to the wheel fork. Also, in operative condition, other types and/or differently formed connections between the legs of the wheel fork are possible, for instance connections that are also formed by various parts of a bicycle (frame).

The wheel fork 1 further comprises a receiving provision for receiving the ring lock 2. As shown in Fig. 1, in the leg 4A, a receiving cavity 7A is formed which forms part of the receiving provision. The receiving cavity 7A lies between two parts of the leg 4A, located opposite to each other viewed in transverse direction to the wheel fork plane. In Fig. 1, these opposite leg parts are indicated with 5A and 6A, respectively. The leg 4A further comprises an insertion/take out opening 8A for inserting into the receiving provision or taking from the receiving provision the ring lock 2 via the opening 8A. In the Figures, arrows A and B are shown. These arrows indicate mutually opposite directions which are parallel to the wheel fork plane and are also transverse to the leg 4A. When the ring lock 2 is in the receiving provision of the wheel fork, the ring lock can be taken out of the receiving provision via the opening 8A in the direction A. When the ring lock 2 is not yet in the receiving provision, it can be inserted into the receiving provision via the opening 8A in the direction B.

In the example shown, in the other leg 4B too, such a receiving cavity is formed, which forms part of the receiving provision, more specifically the receiving cavity 7B. The receiving cavity 7B lies between two parts of the leg 4B located opposite each other viewed in transverse direction to the wheel fork plane. In Fig. 1, these opposite leg parts are indicated with 5B and 6B, respectively. The leg 4B further comprises an insertion/take out opening 8B for inserting the ring lock 2 into or taking the ring lock out of the receiving provision via this opening 8B. When the ring lock 2 is in the receiving provision of the wheel fork, the ring lock can be taken from the receiving provision via the opening 8B in the direction B. When the ring lock 2 is not yet in the receiving provision, it can be inserted into the receiving provision via the opening 8B in the direction A.

It is noted that in the example shown, in each of the two legs 4A and 4B, such a receiving cavity is formed, and that each of the two legs 4A and 4B comprises such an insertion/take out opening. However, the invention is not limited thereto. It is possible that for instance in only one of the two legs 4A and 4B such a receiving cavity is formed. It is also possible that only one of the two legs 4A and 4B comprises such an insertion/take out opening. It is further possible that in a leg not comprising such an insertion/take out opening, a receiving cavity is indeed formed. It is further possible that a leg in which no such receiving cavity is formed, such an insertion/take out opening is indeed provided.

When, in operative condition, the ring lock 2 is mounted in the receiving provision of the wheel fork 1, the parts of the ring lock located in the at least one receiving cavity 7A and/or 7B are therefore confined between the leg parts 5A, 6A and/or 5B, 6B located opposite each other. As a result, prizing between ring lock 2 and wheel fork 1 and twisting the ring lock such that the bolt 3 of the ring lock comes to lie to the side of the bicycle is made more difficult. If a malicious individual should nevertheless succeed in twisting the ring lock, grinding the bolt 3 in two is made difficult by one or both legs 4A, 4B of the wheel fork being in the way.

For the purpose of repair or replacement of the ring lock, the ring lock 2 can simply be disassembled from the wheel fork 1 by taking the ring lock out of the receiving provision in the direction A or B, respectively, via an insertion/take out opening 8A or 8B. It may then be necessary to first eliminate optional blockings present which prevent taking the ring lock out in the take out direction. Eliminating such blockings can be carried out more easily by a repair man in, for instance, a workshop than by a bicycle thief in the street. Some blockings can simply be eliminated by having the key associated with the ring lock at hand. Remounting the repaired ring lock or a replacement ring lock is simple too. The ring lock can be reintroduced into the receiving provision via the insertion/take out opening 8A or 8B in the direction B or A, respectively. Hence, the ring lock is easy to repair and replace.

In the example shown, the wheel fork 1 further comprises a cover cap 20 detachably attached to the legs 4A, 4B of the wheel fork 1, which operatively covers the ring lock at least partly. This cover cap 20 is attached after the ring lock is included in the receiving provision of the wheel fork. In the example shown, the cover cap 20 has a horseshoe main shape (the horseshoe is viewed in the wheel fork plane when the cover cap is in attached condition). This horseshoe shape has two legs which are connected by a connecting part of the horseshoe form. The cover cap may be of plastic.

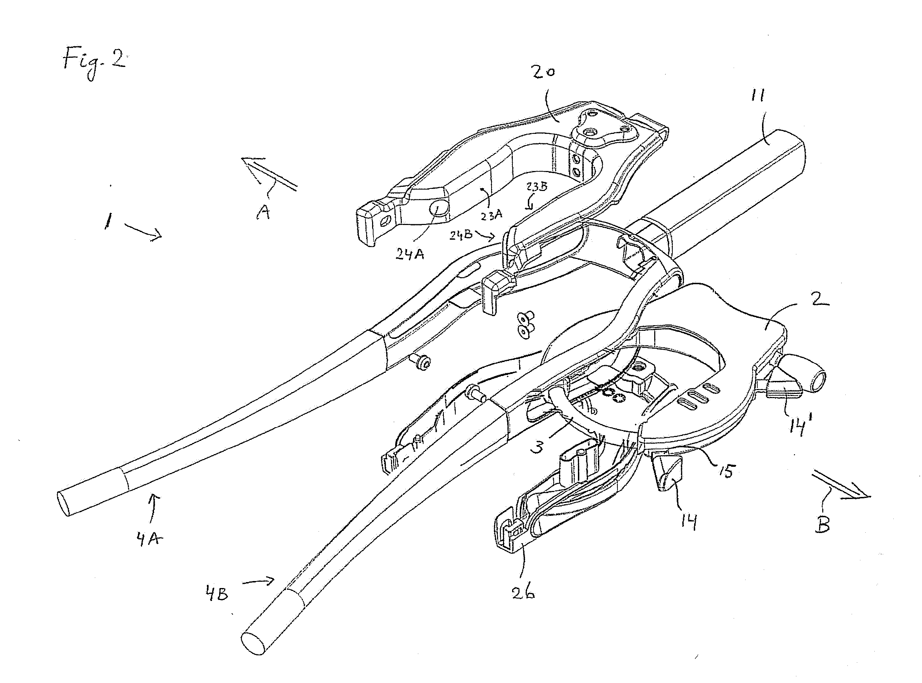

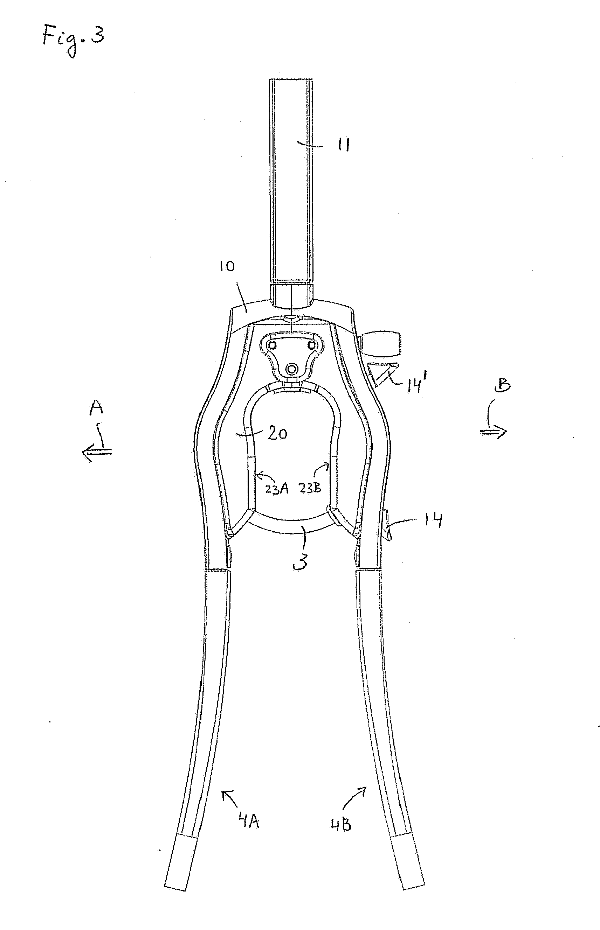

Viewed in the attached, operative condition of the cover cap 20, the cover cap 20 comprises upright walls 23A, 23B (see Figs. 2 and 3) which extend transversely to the wheel fork plane. One wall 23A is located on one leg of the cover cap, the other wall 23B on the other leg of the cover cap. These walls 23A, 23B form blocking means for operatively blocking taking the ring lock out of the receiving provision via the openings 8A and/or 8B. Moving the ring lock relative to the wheel fork is made difficult for a malicious individual. Accordingly, twisting and/or removing the ring lock is made difficult by the walls 23A, 23B.

The cover cap 20 further comprises a passage 24A in one wall 23A, and a passage 24B in the other wall 24A. These passages 24A, 24B are designed for allowing the bolt 3 to pass in the attached, operative condition, when this bolt is slid into or from a housing part of the ring lock. When the bolt 3 of the ring lock extends through the passages 24A, 24B, which is the case when the ring lock is closed, the parts of the walls 23A, 23B that bound the passages 24A, 24B complicate taking the cover cap 20 from the wheel fork in transverse direction to the wheel fork plane. Thus, the passages 24A, 24B in the walls 23A, 23B form security means for operatively preventing the blocking action of the walls 23A, 23B from being cancelled. The security means are thus designed to be activated by operatively sliding a bolt 3 of the ring lock included in the housing part of the ring lock 3 from a housing part of the ring lock 2. A bicycle thief wanting to sabotage the ring lock in locked condition therefore encounters an additional barrier in the form of the protection means.

A bicycle repairman wanting to repair or replace the ring lock encounters no barrier of the passages 24A, 24B in the walls 23A, 23B when the ring lock is in unlocked condition. The bicycle repairman can take the ring lock from the wheel fork after removing the cover cap 20. Should the ring lock be in the locked condition, for instance when the key of the ring lock is lost, it is, in general, simpler for a bicycle repair man in, for instance, a workshop to saw the bolt of the ring lock in two than it is for a bicycle thief in the street. Thus, the repair man can replace the ring lock without damaging the wheel fork.

In the example shown, the wheel fork 1 further comprises a second cover cap 26 (see Fig. 2) detachably attachable to the legs of the wheel fork 1 which operatively covers the ring lock at least partly. This second cover cap 26 too is attached after the ring lock is received in the receiving provision of the wheel fork. The second cover cap 26 is similar to the above-described cover cap 20. In attached condition, the cover caps 20 and 26 are received in the wheel fork, relative to each other on both sides of the wheel fork plane. The second over cap 26 can be provided with similar walls to the walls 23A and 23B and with similar passages to the passages 24A and 24B. In the example shown, in attached condition, the walls 23A and 23B of the cover cap 20 cover the insides of the wheel fork legs 4A and 4B. Optionally, corresponding walls of the second cover cap 26 can cover the outsides of the legs 4A and 4B.

The Figures further show a connecting element 15, forming part of the ring lock 2, between the bolt 3 and an operating handle 14 for the bolt 3. It is noted that in Figs. 2 and 3, the operating handle 14 is shown in a position where the ring lock 3 is locked in that the bolt 3 is in the blocking position. In clarification, in these Figures, with reference numeral 14' is indicated a position of the operating handle 14 associated to an unlocked condition of the ring lock 2. When the ring lock is received in the wheel fork, the connecting element 15 further extends through the insertion/take out opening 8B. The connecting element 15 can also extend through a slot specially designed to that end in a wall of one or both cover caps, extending in transverse direction to the wheel fork plane.

In the example shown, the legs 4A and 4B of the wheel fork 1 shown have no straight configuration at the location of the receiving provision for the ring lock, in a front view to the wheel fork plane (see Fig. 3). At that location, the shapes of the legs largely follow the curved annular shape of the ring lock so that a local widening occurs between the legs. An additional advantage of the invention is that this following the annular shape of the ring lock is not required. The fact is that the invention enables the ring lock, when received in the wheel fork, to partly extend through the insertion/take out opening(s), so that the wheel fork legs 4A and 4B need not be locally widened, but can have, for instance, a normal, straight configuration. This increases the designer choices when meeting designer demands for the wheel fork, such as requirements as to the simplicity of manufacture and the strength of the wheel fork.

It is noted that the above-mentioned examples of embodiments do not limit the invention and that within the range of the accompanying claims, various alternatives are possible. For instance, for wheel fork or cover cap, various constructions and materials can be utilized. Wheel fork and/or cover cap can for instance be forged parts from, for instance, aluminum. Also, cast parts or deep-drawn plate parts can be utilized. Further, a part of the wheel fork in which the receiving cavity is located can be manufactured separately. To such a wheel fork part, separately manufactured leg parts of the wheel fork can be attached by means of, for instance, welding. Such and similar alternatives are understood to fall within the framework of the invention as defined in the accompanying claims.

## Claims

1. A wheel fork for a bicycle, comprising two legs (4A, 4B) located in a wheel fork plane of the wheel fork (1), and a receiving provision for receiving a ring lock (2) for the bicycle, which receiving provision comprises a receiving cavity (7A, 7B) which is formed in at least one of the two legs, which receiving cavity lies between two parts (5A, 6A, 5B, 6B) of the at least one leg, located opposite each other viewed in transverse direction to the wheel fork plane, wherein at least one of the two legs comprises an insertion/take out opening (8A, 8B) for inserting the ring lock into or taking the ring lock out of the receiving provision, via the insertion/takeout opening, parallel to the wheel fork plane, in a transverse direction (A, B) to at least one of the two legs.

2. A wheel fork according to claim 1, further comprising blocking means (23a, 23B) for operatively blocking said taking the ring lock out of the receiving provision via the insertion/take out opening.

3. A wheel fork according to claim 2, further comprising protection means (24A, 24B) for operatively preventing the blocking action of the blocking means from being cancelled, wherein the protection means are designed to be activated by operatively sliding out of a housing part of the ring lock (2) a bolt (3) of the ring lock received in the housing part.

4. A wheel fork according to any one of the preceding claims, further comprising at least one cover cap (20), detachably attachable to the legs (4A, 4B) of the wheel fork (1), which in operative condition covers the ring lock at least partly.

5. A wheel fork according to claim 4, insofar as dependent on claim 2, wherein the cover cap comprises the blocking means (23A, 23B).

6. A wheel fork according to claim 4 or 5, insofar as dependent on claim 3, wherein the cover cap comprises the protection means (24A, 24B).

7. A wheel fork according to any one of the preceding claims, wherein the legs (4A, 4B) are designed such that the ring lock (2), when it is received in the wheel fork (1), extends partly through the at least one insertion/take out opening (8A, 8B).

8. A bicycle frame provided with a wheel fork (1) according to any one of the preceding claims.

9. A bicycle provided with a wheel fork (1) according to any one of claims 1 - 7.
